(19)

Europäisches
Patentamt
European
Patent Office
Office européen
des brevets

(11) **EP 2 720 018 A1**

(12) **EUROPEAN PATENT APPLICATION**

(43) Date of publication:
16.04.2014 Bulletin 2014/16

(51) Int Cl.:
$G01L\ 3/10^{(2006.01)}$ $\quad$ $G01L\ 3/12^{(2006.01)}$

(21) Application number: **12464018.6**

(22) Date of filing: **15.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Continental Automotive GmbH 30165 Hannover (DE)**

(72) Inventor: **Musatini, Theodor Paulus 700590 Iasi (RO)**

(54) **Measuring torsion torque for rotating shafts**

(57) There is described a device for determining a torque (Tq) applied to a rotating shaft (1). The device comprises (a) a first sensor (4a) arranged at a first portion of the shaft (1) and being adapted to detect a passing by of a first marking on the shaft surface during rotation of the shaft (1), (b) a second sensor (4b) arranged at a second portion of the shaft (1) and being adapted to detect a passing by of a second marking on the shaft surface during rotation of the shaft (1), and (c) a determining unit (6) adapted to determine a time difference (deltaT) between a first output signal (5a) from the first sensor (4a) and a second output signal (5b) from the second sensor (4b), and to determine a torque (Tq) applied to the shaft (1) based on the determined time difference (deltaT). There are further described a system and a control unit for a motorized vehicle.

**Figure 1**

EP 2 720 018 A1

**Description**

Field of Invention

The present invention relates to the field of measurement of torsion torque in shafts, in particular to measurement of torsion torque in rotating shafts in automobile vehicles.

Background

In general, measurement of torque for a torsioned shaft may be done by measuring the strain applied to a resistive sensor which is arranged (e.g. glued) on the torsioned shaft.

Other approaches rely on use of the magnetic properties of the material (see e.g. US 7 845 244 B2), processing of a marked surface (see e.g. US 7 089 672 B2), or use of two dephased encoders (see e.g. US 7 591 195 B2).

All these solutions are complex, and thus expensive to implement, and many of them involve sensor arrangements which influence the shaft dynamic and thereby cause measurement errors.

Accordingly, there may be a need for a simple and precise way of measuring torque for torsioned shafts.

Summary

This need may be met by the subject matter according to the independent claims. Advantageous embodiments of the present invention are set forth in the dependent claims.

According to a first aspect of the invention, there is provided a device for determining a torque applied to a rotating shaft. The described device comprises (a) a first sensor arranged at a first portion of the shaft and being adapted to detect a passing by of a first marking on the shaft surface during rotation of the shaft, (b) a second sensor arranged at a second portion of the shaft and being adapted to detect a passing by of a second marking on the shaft surface during rotation of the shaft, and (c) a determining unit adapted to determine a time difference between a first output signal from the first sensor and a second output signal from the second sensor, and to determine a torque applied to the shaft based on the determined time difference.

This aspect of the invention is based on the idea that the amount of torque applied to a rotating shaft is determined by measuring a time difference between respective output signals from a first and a second sensor. The first and second sensors are arranged such that they can detect a passing by of respective first and second markings on the shaft surface when the shaft rotates. This aspect uses the insight, that the time difference is dependent on the amount of torque applied to the shaft.

In the present context, the term "marking" may in particular denote a portion of or on the shaft surface which has a certain physical property.

In the present context, the term "portion of the shaft" may in particular denote a section of the shaft, such as slice.

The first sensor is arranged at a first portion of the shaft in the sense that the first sensor is capable of detecting a first marking which is present on at least a part of the surface of the first portion of the shaft. Thereby, when the shaft is rotated, the first sensor can detect when the first marking is passing by.

Similarly, the second sensor is arranged at a second portion of the shaft in the sense that the second sensor is capable of detecting a second marking which is present on at least a part of the surface of the second portion of the shaft. Thereby, when the shaft is rotated, the second sensor can detect when the second marking is passing by.

In the present context, the term "determining unit" may denote a processing unit, such as a microprocessor, capable of receiving, processing, storing and outputting data.

Further, the term "output signal" may in particular denote an electrical signal, such as an analog or digital signal.

The output signal may preferably have one value, such as "high", when the corresponding marking is detected and another value, such as "low", when the corresponding marking is not detected. In this case, the time difference may be obtained by measuring the time from the first output signal changes from "low" to "high" until the second output signal changes from "low" to "high".

According to an embodiment of the invention, the first marking and the second marking have a different optical property than the shaft surface, and the first and second sensors are optical sensors

In the present context, the term "optical property" may in particular denote color and/or light reflection coefficient.

The first marking may have the same, similar or different optical properties as the second marking.

The first and second optical sensors are capable of detecting changes in the relevant optical property of the shaft surface as the shaft rotates. For example, the sensors may be able to detect the color of the shaft surface or the intensity of light reflected from the shaft surface.

According to a further embodiment of the invention, the device further comprises a light source for illuminating the shaft.

The light source may e.g. be an LED-based light source.

The light source may be designed to illuminate the entire shaft or only a part of the shaft.

In particular, the light source may comprise a first light source arranged in the vicinity of the first optical sensor, and a second light source arranged in the vicinity of the second optical sensor.

According to a further embodiment of the invention, the first marking and the second marking have a different magnetic property than the shaft surface, and the first and second sensors are magnetic sensors.

In the present context, the term "magnetic property" may in particular denote magnetization.

The first marking may have the same or a different magnetic property, such as magnetization, as the second marking.

The first and second magnetic sensors are capable of detecting changes in the magnetic property of the shaft surface as the shaft rotates.

According to a further embodiment of the invention, the first marking and the second marking are formed as a first band extending on the shaft surface.

In the present context, the term "band" may in particular denote a two-dimensional shape having a length and a substantially constant width.

The first band may be glued or painted onto the shaft surface or be formed directly on the shaft surface by use of etching or a laser.

The first and second markings may be formed as separate bands or as a single first band.

According to a further embodiment of the invention, the first band extends in the axial direction of the shaft.

Here it should be noted that the first band extends in the axial direction of the shaft only when no torque is applied to the shaft. In use, the appearance and direction of the first band may change due to torsion caused by application of torque.

In this embodiment, the first band may extend along the entire length of the shaft or along a part of the shaft only.

In both cases, the first and second sensor may beneficially be arranged at respective first and second positions along a line parallel with the axial direction of the shaft. Thereby, the time difference between the sensor output signals will be zero when no torque is applied to the shaft.

More specifically, when the shaft is rotating, the amount of applied torque can be calculated as

$$Tq = \frac{\pi \cdot c^3 \cdot G \cdot d}{2 \cdot L \cdot T} \cdot deltaT$$

where c is the shaft radius, G the elasticity module of the shaft, L the length of the shaft, d width of the first band, T the passing time of the first band (i.e. the time it takes from a sensor detects the corresponding band till the band is no longer detected), and deltaT the time difference between the sensor output signals.

According to a further embodiment of the invention, the device further comprises a further second band extending in parallel with the first band.

By having more bands extending in parallel on the shaft surface, the timely resolution of the device can be improved as the shaft will not have to do a full rotation before a new measurement can be performed. In other words, the device will be capable of delivering more torque measurement values per time unit and thus to respond faster to changes in torque in comparison to the case with only a single band on the shaft surface.

According to a further embodiment of the invention, the determining unit is further adapted to determine a rotational speed of the shaft based on the first output signal and/or the second output signal.

The rotational speed of the shaft may for example be determined by counting detections from either of the first and second sensor until all bands (1, 2 or more) on the shaft have been detected (corresponding to a full rotation of the shaft) and by measuring the time it takes for the shaft to do a full rotation. However, other ways of calculating the rotational speed will be readily apparent.

In this embodiment, the device is capable of determining both torque and rotational speed of a shaft in a simple and precise manner.

According to a second aspect of the invention, there is provided a system. The described system comprises (a) a rotatable shaft, and (b) a device according to any of the preceding claims.

Like the first aspect, this aspect of the invention is based on the idea that the amount of torque applied to the shaft while it is rotating is determined by measuring a time difference between respective output signals from a first and a second sensor. The first and second sensors are arranged such that they can detect a passing by of respective first and second markings on the shaft surface when the shaft rotates.

The system according to this aspect is capable of providing precise measurement of torque and rotational speed in a simple and cost effective manner.

According to a third aspect of the invention, there is provided a control unit for a motorized vehicle comprising a rotatable shaft. The described control unit comprises a device according to the first aspect or any of the embodiments described above. This aspect of the invention provides a control unit for a motorized vehicle, which is capable of obtaining and using high-precision measurements of torque (and optionally rotational speed )for a rotating shaft within the vehicle.

The determining unit may form part of a processor of the control unit, which is programmed to receive the sensor output signals through a suitable interface and to process the signals in order to determine the torque (and where applicable the rotational speed).

In the context of this document, reference to or mentioning of a computer program is equal to any of the notions of a program element, a computer program product and/or a computer readable medium which contains instructions for controlling a computer system in order to coordinate the functioning of a system or a method in a manner suitable for achieving the effects related to the method according to the invention.

The computer program may be implemented as computer readable instruction code in any suitable programming language, such as JAVA, C++, etc. The computer program may be stored on a computer readable storage medium (CD-ROM, DVD, Blu-ray disc, disc drive, volatile or non-volatile memory, built-in or internal storage/processor, etc.). The program code may program a computer or another programmable device, such as in particular a control unit for a vehicle engine, in such a way that the desired functions are executed. The computer program may further be provided in a network, such as the Internet, through which it can be downloaded by a user as needed.

The invention may be realized by means of a computer program, i.e. software, as well as by means of one or more special electronic circuits, i.e. as hardware or as any arbitrary hybrid form, i.e. by means of both hardware components and software components.

It is explicitly noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter, also any combination of features relating to different subject matters, in particular any combination of features of the method type claims and features of the apparatus type claims, forms part of the disclosure of this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1 shows a schematic overview of an embodiment.

Figure 2 shows the sensor outputs as functions of time in accordance with an embodiment.

Detailed Description

The illustration in the drawing is schematic. It is noted that in different figures, similar or identical elements are provided with the same reference signs or with reference signs, which differ only within the first digit.

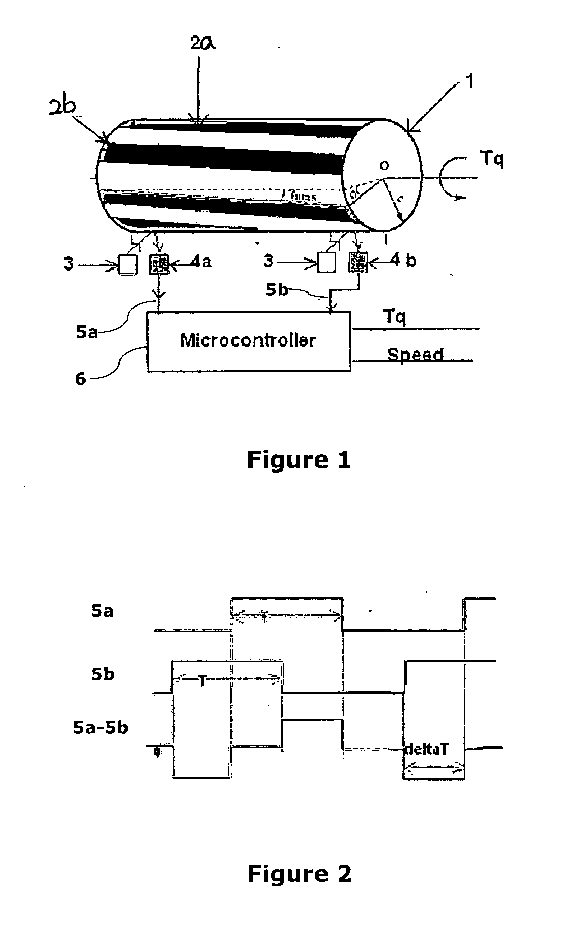

Figure 1 shows a device for measuring torque Tq and rotational speed of a rotating shaft 1. Elongate bands 2a, 2b are provided on the surface of the shaft 1. The bands 2a, 2b have a distinctly different color than the remaining surface of the shaft 1. The bands 2a, 2b extend in a direction parallel to the shaft's 1 axis of rotation when no torque is applied to the shaft, i.e. when no torsion of the shaft occurs. The shaft 1 is a solid cylindrical shaft having radius c.

The illustrated device comprises light sources 3, a first optical sensor 4a providing a first output signal 5a, a second optical sensor 4b providing a second output signal 5b, and a determining unit 6 in the form of a microcontroller which is programmed to process the output signals 5a, 5b in order to determine values of torque Tq and rotational speed of the shaft.

The optical sensors 4a, 4b provide electrical output signals 5a, 5b which depend on whether or not a part of a band 2a or 2b is present on the part of the shaft's 1 surface which the optical sensor 4a, 4b can see. As shown in Figure 2, when the shaft 1 is rotating, the sensor output signals 5a, 5b alternate between a "high" value corresponding to detection of a band 2a or 2b and a "low" value corresponding to no detection of a band 2a or 2b.

The first optical sensor 4a is arranged below the rotating shaft 1 at a position proximate to a first end (left end in the drawing) of the shaft 1, whereas the second optical sensor 4b is arranged below the rotating shaft 1 in a position proximate to a second end (right end in the drawing) of the shaft 1. The first and second optical sensors 4a, 4b are further positioned such that a (virtual) line connecting them is parallel to the shaft's 1 axis of rotation. Thereby, the sensor output signals 5a and 5b as functions of time will be identical when no torsion occurs in the shaft 1.

When torque is applied to the rotating shaft 1, a certain amount of torsion will arise in the shaft 1. Such torsion will result in a phase difference between the output signals 5a and 5b from the optical sensors 4a and 4b. More specifically, as shown in Figure 1, the applied torque Tq will cause the right-hand part of the shaft 1 to be ahead of the left-hand part of the shaft 1. Accordingly, the bands 2a, 2b will be tilted an angle φ relative to the axis of rotation of the shaft 1 and the output signals 5a and 5b will be shifted an amount deltaT in time.

The relation between the torque Tq and the angle φ is given as

$$Tq = \frac{\pi \cdot c^4 \cdot G \cdot \varphi}{2 \cdot L} \quad,$$

where c is the radius of the shaft 1, G the elasticity module of the shaft 1, and L the length of the shaft.

Furthermore, the relation between the angle φ and the time difference deltaT is given as

$$\varphi = \frac{d \cdot deltaT}{c \cdot T}\;,$$

where d denotes the width of the band 2a or 2b and T denotes the time it takes the band 2a or 2b to pass one of the sensors 4a, 4b when the shaft 1 rotates.

As a result, the torque Tq can be calculated as

$$Tq = \frac{\pi \cdot c^3 \cdot G \cdot d}{2 \cdot L \cdot T} \cdot deltaT$$

The time difference del taT can e. g. be obtained by analyzing the difference 5a-5b between the output signals 5a and 5b. As shown in Figure 2, deltaT may be found as the duration of the part of the difference signal 5a-5b which is below zero.

Finally, the rotational speed ω (in rotations per second) of the shaft 1 may e.g. be determined as

$$\omega = \frac{d}{2 \cdot \pi \cdot c \cdot T} \quad.$$

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

List of reference signs

| 1 | Shaft |
|---|---|
| 2a | Band |
| 2b | Band |
| 3 | Light source |
| 4a | Optical sensor |
| 4b | Optical sensor |
| 5a | Sensor output signal |
| 5b | Sensor output signal |

6       Determining unit

**Claims**

1.  A device for determining a torque (Tq) applied to a rotating shaft (1), the device comprising
    a first sensor (4a) arranged at a first portion of the shaft (1) and being adapted to detect a passing by of a first marking on the shaft surface during rotation of the shaft (1),
    a second sensor (4b) arranged at a second portion of the shaft (1) and being adapted to detect a passing by of a second marking on the shaft surface during rotation of the shaft (1), and
    a determining unit (6) adapted to determine a time difference (deltaT) between a first output signal (5a) from the first sensor (4a) and a second output signal (5b) from the second sensor (4b), and to determine a torque (Tq) applied to the shaft (1) based on the determined time difference (deltaT).

2.  The device according to claim 1, wherein the first marking and the second marking have a different optical property than the shaft surface, and wherein the first sensor (4a) and the second sensor (4b) are optical sensors.

3.  The device according to claim 2, further comprising a light source (3) for illuminating the shaft (1).

4.  The device according to claim 1, wherein the first marking and the second marking have a different magnetic property than the shaft surface, and wherein the first sensor (4a) and the second sensor (4b) are magnetic sensors.

5.  The device according to any of the preceding claims, wherein the first marking and the second marking are formed as a first band (2a) extending on the shaft surface (1).

6.  The device according to claim 5, wherein the first band (2a) extends in the axial direction of the shaft (1).

7.  The device according to claim 5 or 6, further comprising a second and further band (2b) extending in parallel with the first band (2a).

8.  The device according to any of the predetermined claims, wherein the determining unit (6) is further adapted to determine a rotational speed of the shaft based on the first output signal (5a) and/or the second output signal (5b).

9.  A system comprising
    a rotatable shaft (1), and
    a device according to any of the preceding claims.

10. A control unit for a motorized vehicle comprising a rotatable shaft (1), the control unit comprising
    a device according to any of claims 1 to 8 for determining a torque (Tq) applied to the at least one rotatable shaft (1).

**Figure 1**

**Figure 2**

Europäisches
Patentamt

European
Patent Office

Office européen
des brevets

# EUROPEAN SEARCH REPORT

Application Number

EP 12 46 4018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/320609 A1 (CHAN D S K; DANIAN Z; GAVRELSKY R Y; GAWRELSKI R J; LI Y; LI YU; MCCAR) 31 December 2009 (2009-12-31) * abstract; figures 4,12 * * paragraph [0072] - paragraph [0087] * ----- | 1-3,5-9 | INV. G01L3/10 G01L3/12 |
| X | US 3 273 386 A (HARRY SIPLER) 20 September 1966 (1966-09-20) * the whole document * ----- | 1-10 | |
| | | | TECHNICAL FIELDS SEARCHED (IPC) G01L |

The present search report has been drawn up for all claims

| Place of search | Date of completion of the search | Examiner |
|---|---|---|
| The Hague | 22 April 2013 | Amroun, Sébastien |

EPO FORM 1503 03.82 (P04C01)

**ANNEX TO THE EUROPEAN SEARCH REPORT
ON EUROPEAN PATENT APPLICATION NO.**

EP 12 46 4018

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2013

| Patent document cited in search report | | Publication date | Patent family member(s) | Publication date |
|---|---|---|---|---|
| US 2009320609 | A1 | 31-12-2009 | DE 102009025989 A1<br>FR 2946426 A1<br>JP 2010008409 A<br>RU 2009124266 A<br>US 2009320609 A1 | 31-12-2009<br>10-12-2010<br>14-01-2010<br>27-12-2010<br>31-12-2009 |
| US 3273386 | A | 20-09-1966 | NONE | |

For more details about this annex : see Official Journal of the European Patent Office, No. 12/82

**EP 2 720 018 A1**

**Patent documents cited in the description**

- US 7845244 B2
- US 7089672 B2
- US 7591195 B2